# EUROPÄISCHE PATENTANMELDUNG

(11) **EP 4 708 333 A1**
(43) Veröffentlichungstag der Anmeldung: **11.03.2026**
(21) Anmeldenummer: 25195139.8
(22) Anmeldetag: 11.08.2025
(51) Int. Cl.: H01B 17/02, B60M 1/16, B60M 1/30, H01B 17/32

(54) **VERBUNDISOLATOR FÜR OBERLEITUNGSANLAGE, OBERLEITUNGSANLAGE MIT VERBUNDISOLATOR UND VERFAHREN ZUR HERSTELLUNG EINES SOLCHEN VERBUNDISOLATORS**

(30) Priorität: 02.09.2024 DE 102024208318
(71) Anmelder: Siemens Mobility GmbH, 80997 München (DE)
(72) Erfinder: Terfloth, Sebastian, 91077 Dormitz (DE)
(74) Vertreter: Siemens Patent Attorneys

(57) **Zusammenfassung**

Die Erfindung betrifft einen Verbundisolator für eine Oberleitungsanlage, eine Oberleitungsanlage mit wenigstens einem solchen Verbundisolator 1 und ein Verfahren zum Herstellen eines solchen Verbundisolators 1, wobei der erfindungsgemäße Verbundisolator wenigstens einen Isolatorkern 3 und wenigstens eine Verbindungsvorrichtung 15 zur Verbindung des Verbundisolators 1 mit einer Befestigungseinrichtung und wenigstens einer Klemmvorrichtung 13 zur direkten Verbindung des Verbundisolators 1 mit einer Deckenstromschiene 40 der Oberleitungsanlage aufweist, wobei die Klemmvorrichtung 13 wenigstens teilweise unmittelbar an den Isolatorkern 3 des Verbundisolators 1 angeformt ist.

## Beschreibung

Bei Oberleitungen für verkehrstechnische Anlagen für zumindest teilweise elektrisch angetriebene, schienengebundene oder nicht schienengebundene Fahrzeuge, wie z.B. alle möglichen elektrischen Schienenfahrzeuge oder E-LKWs, E-Busse etc., gibt es Abschnitte mit beengten Platzverhältnissen, beispielsweise in Tunneln, unter Brücken, etc. Zur Gewährleistung der Stromversorgung für die entsprechenden Fahrzeuge kommen in solchen Abschnitten der jeweiligen Oberleitungsanlagen vorzugsweise Deckenstromschienen zur Anwendung. Für die dortige Aufhängung der Oberleitung und somit der Deckenstromschienen sind unterschiedliche Stützpunktbauformen bekannt, die je nach vorhandenem Platz, in beispielsweise Tunneln oder unter Brücken, zum Einsatz kommen. Allen Stützpunktbauformen gemeinsam ist die Aufhängung der Deckenstromschiene(n) mit einer oder mehrerer Tragklemme(n), die die jeweilige(n) Deckenstromschiene(n) beispielsweise durch Einklemmen halten. Gleichzeitig müssen die Stützpunktbauformen Längenausdehnungen der jeweiligen Deckenstromschiene(n) z.B. aufgrund von Temperaturschwankungen ermöglichen bzw. aufnehmen. Bekannt sind hierzu Bauformen mit drehbaren oder gleitenden Stützpunkten, wobei bei Letzteren dies in der Regel mittels einer gleitenden Führung des, beispielsweise oberhalb einer Deckenstromschiene an einer Tunneldecke etc., hängenden Stützpunkts gewährleistet wird. Aufgrund der vorliegenden elektrischen Spannung sind, abhängig von deren Größe bzw. Werten, entsprechend dimensionierte Isolatoren zwischen den Stromschienen und den Stützpunkten zwingend erforderlich. Zur besonders einfachen, senkrechten Anordnung solcher Isolatoren über den Stromschienen ist dementsprechend, wegen der vorher genannten, vorliegenden beengten Platzverhältnisse insbesondere in Tunneln, eine möglichst niedrige Bauhöhe der Isolatoren notwendig. Dies wird vorwiegend bei verkehrstechnischen Anlagen im Personennahverkehr, wie beispielsweise für bzw. bei U-Bahnen, Metros, Stadtbahnen etc., wegen der Verwendung einer deutlich niedrigeren Nennspannung von maximal 3 kV DC im Vergleich zu bis zu 25 kV AC bei Vollbahnen zum Teil erreicht. Die, zur tatsächlichen, platzmäßigen Realisierung der genannten Anordnung der Isolatoren, senkrecht über der Deckenstromschiene, notwendige, noch geringere Bauhöhe der Isolatoren ist bisher in der Regel nur durch die Verwendung von Gießharzisolatoren zu erreichen. Bei diesem Typus von Isolatoren können die Befestigungsanschlüsse, beispielsweise M16-Schrauben-Gewinde, an beiden Enden in den jeweiligen Isolierkörper hineinragen und ermöglichen auf diese Weise die erforderliche, besonders geringe Bauhöhe zur Realisierung der oben genannten Anordnung.

Gießharzisolatoren sind jedoch in mehrfacher Hinsicht nachteilig gegenüber Verbundisolatoren, insbesondere Silikon-Verbundisolatoren. Gießharzisolatoren sind anfällig für kurzzeitige mechanische Überlastungen, die zu einem vollständigen Bruch und somit einem sofortigen Totalausfall führen können, im Gegensatz zu einem sogenannten "Fail Safe Mode" ohne vollständigen Bruch bei Verbundisolatoren. Des Weiteren ermöglichen Gießharzisolatoren im Vergleich zu Verbundisolatoren nur einen geringeren Kriechweg bezogen auf die entsprechende Luftstrecke. Außerdem ist deren Oberfläche weder schmutzabweisend noch hydrophob. Letzteres führt insbesondere in Tunneln mit hoher Feuchtigkeit, insbesondere durch Luftfeuchtigkeit und/oder Wassereintritt, zur Bildung von leitfähigen Spuren auf der Oberfläche und infolgedessen zu einer mechanischen Schädigung der Gießharzisolatoren aufgrund von Kriechströmen.

Handelsübliche Verbundisolatoren bestehen aus einem Glasfaserkunststoff (GFK)-Stab als Isolatorkern zur inneren Isolation zur mechanischen Kraftübertragung, aus darauf aufgecrimpten, metallischen Armaturen zur Einleitung der Kraft aus dem GFK-Stab in entsprechende Anbauteile und einer Isolatorhülle als äußere Isolierung zum Schutz des GFK-Stabes und zur Vergrößerung des Kriechwegs. Derzeit verfügbare Verbundisolatoren haben im Vergleich zu Gießharzisolatoren eine größere Bauhöhe, da zum Anschluss entsprechender Anbauteile insbesondere metallische Anschlussarmaturen benötigt werden, die jedoch prinzipbedingt nicht im Isolierkörper des Verbundisolators selbst eingebracht werden können, was die Bauhöhe entsprechend vergrößert. Dadurch wird ein entsprechender Einsatz zur Realisierung der oben genannten Anordnung aufgrund der beengten Platzverhältnisse erschwert bzw. unmöglich gemacht, obwohl der Einsatz von Verbundisolatoren diesbezüglich deutliche Vorteile gegenüber Gießharzisolatoren bieten würde. Verbundisolatoren werden daher bei der Aufhängung von Deckenstromschienen bisher überwiegend bei Bauformen mit drehbaren Stützpunkten, insbesondere mit seitlich angeordneten Auslegern oder auch bei Bauformen mit gleitendem Stützpunkt, dabei allerdings üblicherweise seitlich liegend mit beiderseits angeordneten Isolatoren, eingesetzt. Dies erfordert jedoch eine signifikant aufwändigere Stützpunktgestaltung bzw. den Einsatz von zwei Isolatoren und ist somit deutlich kosten- und wartungsintensiver.

Der Erfindung liegt die Aufgabe zugrunde, einen verbesserten Verbundisolator mit geringerer Bauhöhe, eine Oberleitungsanlage mit einem solchen Verbundisolator sowie ein Verfahren zur Herstellung eines solchen Verbundisolators anzugeben.

Gelöst wird die Aufgabe durch die Merkmale des unabhängigen Patentanspruchs 1 sowie der nebengeordneten Patentansprüche. Weiterbildungen und Ausgestaltungen der Erfindung finden sich in den Merkmalen der abhängigen Patentansprüche wieder.

Dazu weist der erfindungsgemäße Verbundisolator wenigstens einen Isolatorkern und wenigstens eine Klemmvorrichtung zur direkten Verbindung des Verbundisolators mit einer Deckenstromschiene der Oberleitungsanlage auf, wobei die Klemmvorrichtung wenigstens teilweise unmittelbar an den Isolatorkern des Verbundisolators angeformt ist.

Die erfindungsgemäße Lösung hat den Vorteil, dass die Klemmvorrichtung, beispielsweise Tragklemme, zum Halten einer Deckenstromschiene, die bisher bezüglich eines Verbundisolators als separates Bauteil mit einer Verbindungsvorrichtung, beispielsweise Armatur bzw. Anschlussarmatur, des Verbundisolators verbunden, beispielsweise angeschraubt, werden muss, nunmehr diese Verbindungseinrichtung, beispielsweise Armatur bzw. Anschlussarmatur, vollständig ersetzt und somit Teil des erfindungsgemäßen Verbundisolators selbst wird. Mittels des Verpressens, dem sogenannten Crimpen, der Klemmvorrichtung, beispielsweise Tragklemme, über eine, aus Stabilitätsgründen notwendige Länge mit dem Isolatorkern, beispielsweise einen Glasfaserkunststoff (GFK)-Stab, des Verbundisolators entfällt demzufolge die bisher notwendige, entsprechende Armatur und somit auch die in der betreffenden Armatur notwendigen Bohrungen bzw. deren Einschraubtiefe zur Aufnahme von Verbindungsmitteln, insbesondere Verschraubungen, um Tragklemmen mit den Verbundisolatoren zu verbinden. Dadurch verringert sich die Bauhöhe der erfindungsgemäßen Verbundisolatoren entsprechend, wodurch somit vorteilhafterweise der Einsatz solcher Verbundisolatoren bei Stützpunktbauformen, insbesondere zur besonders einfachen, senkrechten Anordnung solcher Verbundisolatoren über den Deckenstromschienen, beispielsweise bei gleitenden Stützpunkten für Deckenstromschienen, ermöglicht wird, bei welchen dies aufgrund der beengten Platzverhältnisse bisher nicht möglich war. Unabhängig davon weist der erfindungsgemäße Verbundisolator weiter eine entsprechende Verbindungsvorrichtung insbesondere Anschlussarmatur auf, so dass der erfindungsgemäße Verbundisolator wie bisher zur Verbindung des Verbundisolators mit entsprechenden Befestigungseinrichtungen, insbesondere Anbauteilen, beispielsweise für einen, oberhalb einer Deckenstromschiene an einer Tunneldecke etc., befestigten bzw. hängenden Stützpunkt, ohne weitere Anpassungen eingesetzt werden kann.

Auf diese Weise können nunmehr erfindungsgemäße Verbundisolatoren anstelle von Gießharzisolatoren auch an Stellen bzw. Abschnitten einer Oberleitungsanlage, an denen bisher, bedingt durch die Bauhöhe, nur Gießharzisolatoren zum Einsatz kommen konnten, eingesetzt werden, wodurch die Vorteile der Verbundisolatoren, mechanische Überlastbarkeit, sicherer Ausfallmechanismus bei Überlast, Erhöhung des Kriechweges, Gestaltung effektiver Schirmprofile sowie eine hydrophobe und schmutzabweisende Oberfläche zur Minimierung von Kriechströme, an den betreffenden Stellen effektiv genutzt werden können.

Nach einer bevorzugten Ausführungsform der Erfindung ist die wenigstens eine Klemmvorrichtung mehrteilig ausgeführt.

Nach einer weiteren besonders bevorzugten Ausführungsform der Erfindung besteht die Klemmvorrichtung wenigstens aus einem Verbindungselement und wenigstens einem Klemmelement, wobei das wenigstens eine Verbindungselement unmittelbar an den Isolatorkern des Verbundisolators angeformt ist und wobei das wenigstens eine Klemmelement lösbar mit dem wenigstens einen Verbindungselement verbindbar ist.

Besonders bevorzugt besteht das wenigstens eine Klemmelement der Klemmvorrichtung aus zwei separaten Teilen.

Auf diese Weise kann bei der Herstellung des erfindungsgemäßen Verbundisolators das Verbindungselement der Klemmvorrichtung separat, also nur der Teil unmittelbar an den Isolatorkern angeformt bzw. mit dem Isolatorkern verpresst bzw. aufgecrimpt werden, der hierfür benötigt wird, wodurch die Herstellung entsprechend einfacher und genauer ist. Des Weiteren kann das Klemmelement erst bei Bedarf nachträglich und lösbar mit Befestigungsmitteln, beispielsweise mittels Schrauben, mit dem Verbindungselement und somit mit dem Verbundisolator verbunden werden. Dadurch ist das Einklemmen einer Deckenstromschiene in die Klemmvorrichtung, beispielsweise Tragklemme, bei bzw. zur Befestigung der Oberleitungsanlage in Tunneln oder unter Brücken besonders einfach und schnell. Durch die Aufteilung des Klemmelements auf zwei separate Teile wird dies noch weiter vereinfacht und erleichtert die Montage der Deckenstromschiene(n) insbesondere bei vorliegenden, beengten Platzverhältnissen, beispielsweise in Tunneln oder unter Brücken etc., erheblich.

Nach einer bevorzugten Ausführungsform der Erfindung ist die Klemmvorrichtung aus Metall ausgeführt.

Dadurch übernimmt die Klemmvorrichtung vorteilhafterweise vollständig die Funktion der ersetzten Verbindungsvorrichtung, beispielsweise Armatur. Die elektrische Funktion des Verbundisolators bleibt dabei ohne Einschränkung gewährleistet, da durch das Verpressen, dem sogenannten Crimpen, der Klemmvorrichtung, beispielsweise einer Tragklemme, mit dem Isolatorkern, insbesondere mit einem Ende eines GFK-Stabes, auch der Mindestabstand zu dem aufgepressten Ende der Armatur auf der gegenüberliegenden Seite des Isolatorkerns, also des GFK-Stabs, nicht unterschritten wird.

Nach einer weiteren Ausführungsform der Erfindung ist die Klemmvorrichtung des Verbundisolators zum Einklemmen der Deckenstromschiene zwischen dem wenigstens einen Verbindungselement und dem wenigstens einen Klemmelement eingerichtet.

Auf diese Weise ist gewährleistet, dass die einzuklemmende Deckenstromschiene je nach Anforderung ohne Spiel, also nach dem Einklemmen unbeweglich, oder aber mit einem gewissen Spiel, also nach dem Einklemmen in gewissem Rahmen beweglich, befestigt, insbesondere eingeklemmt werden kann.

Nach einer weiteren bevorzugten Ausführungsform der Erfindung weist der Verbundisolator wenigstens eine Isolationshülle auf, die den Isolatorkern und/oder die Verbindungsvorrichtung und/oder die Klemmvorrichtung wenigstens teilweise umhüllt.

Besonders bevorzugt besteht die Isolationshülle des Verbundisolators im Wesentlichen aus Silikon.

Durch die Isolationshülle als äußere Isolierung des Verbundisolators wird einerseits neben dem Isolatorkern, beispielsweise der GFK-Stab, vorteilhafterweise auch der umhüllte Teil der Klemmvorrichtung beispielsweise vor Umweltbedingungen geschützt. Andererseits wird dadurch auch der Kriechweg vergrößert. Als Material für die Isolationshülle ist Silikon besonders geeignet, da Silikon sehr einfach be- bzw. verarbeitbar und ausgesprochen problemlos verfügbar ist.

Ein weiterer Aspekt der vorliegenden Erfindung betrifft eine Oberleitungsanlage mit wenigstens einem Verbundisolator nach einem der Ansprüche 1 bis 8.

Ein weiterer Aspekt der vorliegenden Erfindung betrifft ein Verfahren zum Herstellen eines Verbundisolators nach einem der Ansprüche 1 bis 8 mit folgenden Schritten:
- Zuschneiden eines Isolatorkerns,
- Verpressen einer Verbindungsvorrichtung mit dem Isolatorkern;
- Verpressen des wenigstens einen Verbindungselements einer Klemmvorrichtung mit dem Isolatorkern;
- Umhüllen des Isolatorkerns und/oder der Verbindungsvorrichtung und/oder des Verbindungselements der Klemmvorrichtung wenigstens teilweise mit einer Isolationshülle;
- Verbinden des wenigstens einen Klemmelements der Klemmvorrichtung mit dem wenigstens einen Verbindungselement der Klemmvorrichtung.

Die vorher beschriebenen Ausprägungen der Erfindung und insbesondere deren Vorteile sind sowohl auf das genannte Verfahren als auch auf die genannte Oberleitungsanlage sinngemäß übertragbar und gelten demzufolge insoweit auch hierfür.

Im Weiteren werden bevorzugte Ausführungsbeispiele der Erfindung mit Bezugnahme auf die Zeichnungen näher erläutert. Es zeigen:
Fig. 1 Einen schematischen Querschnitt einer Ausführungsform eines erfindungsgemäßen Verbundisolators,
Fig. 2 eine perspektivische Darstellung der Ausführungsform eines erfindungsgemäßen Verbundisolators aus Figur 1,
Fig. 3 eine weitere perspektivische Darstellung der Ausführungsform eines erfindungsgemäßen Verbundisolators aus Figur 1 und
Fig. 4 eine weitere perspektivische Darstellung der Ausführungsform eines erfindungsgemäßen Verbundisolators aus Figur 1 mit eingeklemmter Deckenstromschiene.

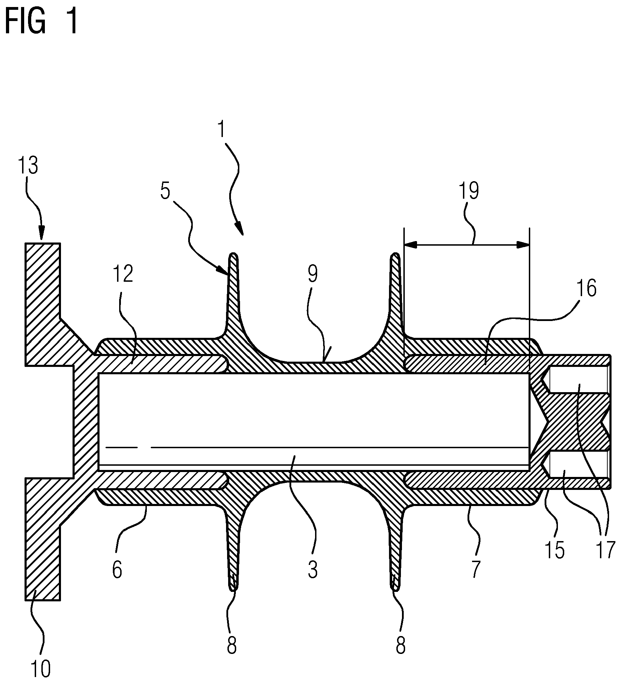

In den Figuren 1 bis 4 werden jeweils gleiche Teile mit den gleichen Bezugszeichen bezeichnet. Die Ausführungsformen können sich dabei ggf. unterscheiden.

Figur 1 zeigt einen schematischen Querschnitt einer Ausführungsform eines erfindungsgemäßen Verbundisolators 1. Der Verbundisolator 1 gemäß Figur 1 besteht aus einem Isolatorkern, hier als GFK-Stab 3 ausgeführt, der den Isolierkörper, bestehend aus einem glasfaserverstärktem Kunststoff (GFK) bildet, einer Verbindungsvorrichtung, hier der Anschlussarmatur 15, einer Klemmvorrichtung, hier als Tragklemme 13 ausgeführt und einer Isolationshülle 5, in vorliegender Ausführung bestehend aus Silikon, die den GFK-Stab 3 sowie teilweise die Anschlussarmatur 15 und ein Verbindungselement 10 der Tragklemme 13 einhüllt. Zur besseren Übersicht ist hier nur das Verbindungselement 10 der mehrteiligen Tragklemme 13 dargestellt.

Die Anschlussarmatur 15 ist wie dargestellt auf einer Seite in üblicher Weise auf den GFK-Stab 3 aufgepresst bzw. aufgecrimpt, da die betreffenden Elemente zum Anschluss von Befestigungseinrichtungen, insbesondere Anbauteilen prinzipbedingt nicht in den Isolierkörper selbst also den GFK-Stab 3 eingebracht werden können. Die Anschlussarmatur 15 besteht vorzugsweise aus Metall, beispielsweise aus Stahl, Aluminium oder aus beliebigen anderen, geeigneten Materialien.

Aus Stabilitätsgründen muss die Anschlussarmatur 15 über eine gewisse Länge, die sogenannte Crimp-Länge 19, mit dem GFK-Stab 3 als Isolatorkern verpresst werden. Die Crimp-Länge 19 ist somit ein Maß für die erforderliche Kontaktfläche 16 zwischen der Anschlussarmatur 15 und dem GFK-Stab 3, die nach dem Aufpressen vorliegen muss. Die Anschlussarmatur 15 weist darüber hinaus Aufnahmeeinrichtungen, hier Bohrlöcher bzw. Bohrungen 17, auf, die entsprechende Anschlussmöglichkeiten, hier Einschraubmöglichkeiten, für entsprechende Befestigungseinrichtungen, insbesondere Anbauteile, beispielsweise für einen, oberhalb einer Deckenstromschiene an einer Tunneldecke etc., befestigten bzw. hängenden Stützpunkt, zur Verfügung stellen, oder auch, falls erforderlich, für eine Profilaufnahme, die auf ein Tragprofil beispielsweise eines an einer Tunneldecke befestigten bzw. hängenden Stützpunkts zur Befestigung bzw. Aufhängung einer Deckenstromschiene abgestimmt ist. Die Bohrungen 17 zur Aufnahme entsprechender Schrauben zur Befestigung bzw. Verbindung von Befestigungseinrichtungen, insbesondere Anbauteilen sind dabei prinzipbedingt vollständig in der Anschlussarmatur 15 eingebracht und somit vollständig vom GFK-Stab 3 getrennt. Die Baulänge solcher Anschlussarmaturen 15 ergibt sich somit aus der erforderlichen Crimp-Länge 19, die je nach mechanischer Auslegung typischerweise im Bereich zwischen 20 - 80 mm liegt, und der erforderlichen Einschraubtiefe der Befestigungsteile, die je nach Werkstoff bei ca. dem 1-2fachen des Gewindedurchmessers, zuzüglich einer Reserve, beispielsweise wegen einer Abstufung von verfügbaren Schraubenlängen in Schritten von 5mm bzw. 10mm, so dass sich beispielsweise bei bzw. für M16-Schrauben wie vorliegend, eine erforderliche Einschraubtiefe von mindestens 38 mm ergibt.

Derzeit verfügbare, handelsübliche Verbundisolatoren bzw. Silikonverbundisolatoren weisen auf der Seite eines dem GFK-Stab 3 vergleichbaren Isolatorkerns, die der Seite mit einer, der aufgecrimpten Anschlussarmatur 15 vergleichbaren Anschlussarmatur gegenüberliegt, eine weitere, ebenfalls aufgepresste zweite Anschlussarmatur mit vergleichbarer Länge wie die dargestellte Anschlussarmatur 15 auf. Bei bisher verfügbaren Verbundisolatoren werden entsprechende Tragklemmen zur Fixierung bzw. Befestigung von Deckenstromschienen an dieser zweiten Anschlussarmatur befestigt, insbesondere angeschraubt. Um die elektrische Funktion eines Verbundisolators zu gewährleisten, müssen die entsprechenden, aufgepressten Anschlussarmaturen, welche an beiden Enden eines Isolatorkerns, vergleichbar dem GFK-Stab 3, sitzen, darüber hinaus einen elektrisch bedingten Mindestabstand zueinander aufweisen, der mit Zunahme der verwendeten bzw. vorliegenden Nennspannung ebenfalls zunimmt. Aus allen vorher beschriebenen, einzuhaltenden Randbedingungen ergibt sich die bisherige, vergleichsweise sehr große Mindestbauhöhe eines handelsüblichen Verbundisolators.

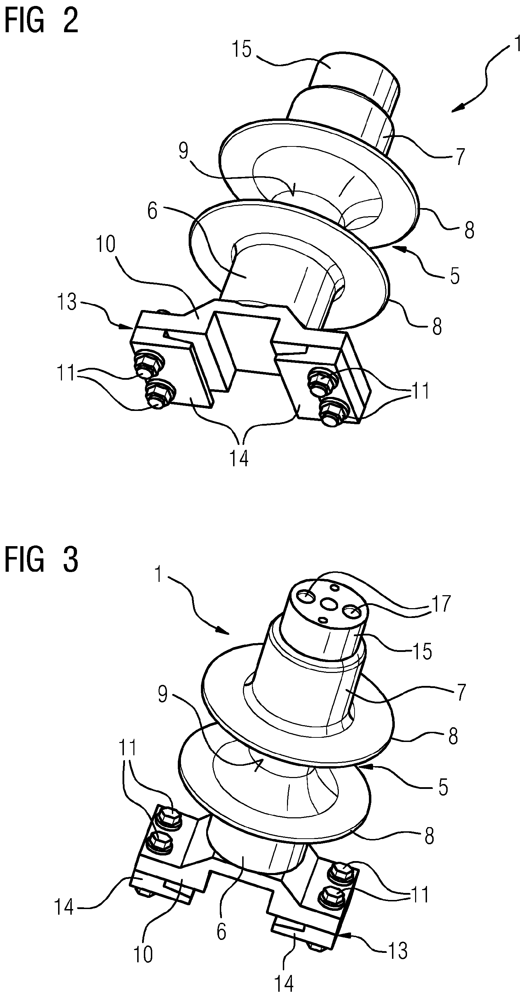

Erfindungsgemäß, wie in Figur 1 dargestellt, ist anstelle einer sonst üblichen, weiteren Anschlussarmatur die Tragklemme 13, bzw. vorliegend das Verbindungselement 10 der vorliegend mehrteiligen Tragklemme 13 auf das, der Anschlussarmatur 15 gegenüberliegende Ende des GFK-Stabs 3 angeformt bzw. aufgepresst oder aufgecrimpt und ersetzt somit vollständig und ersatzlos die bisher übliche, der Anschlussarmatur 15 vergleichbare, weitere Anschlussarmatur. Die Tragklemme 13 und somit auch das Verbindungselement 10 besteht vorzugsweise ebenfalls aus Metall, beispielsweise aus Stahl, Aluminium oder aus beliebigen anderen, geeigneten Materialien und hat somit einer Anschlussarmatur vergleichbare elektrische Eigenschaften. Aus Stabilitätsgründen wird das Verbindungselement 10 der Tragklemme 13 über eine, mit der Anschlussarmatur 15 vergleichbare Crimp-Länge 19 mit dem GFK-Stab 3 als Isolatorkern verpresst, um ebenfalls die erforderliche Kontaktfläche 12 zwischen dem Verbindungselement 10 und dem GFK-Stab 3 nach dem Aufpressen zu erreichen bzw. zu gewährleisten. Gleichzeitig muss bzw. wird wie bisher auch der notwendige elektrische Mindestabstand zwischen dem Ende des aufgepressten Verbindungselements 10 und dem Ende der aufgepressten Anschlussarmatur 15 eingehalten. Das Verbindungselement 10 benötigt im Gegensatz zur Anschlussarmatur 15 keine vergleichbaren Aufnahmeeinrichtungen 17. Somit entfällt die bisher notwendige Einschraubtiefe für die Tragklemme 13 und die Bauhöhe des erfindungsgemäßen Verbundisolators 1 verringert sich entsprechend. Die mehrteilige Ausführungsform der Tragklemme 13 bestehend aus Verbindungselement 10 und, aus Übersichtlichkeitsgründen erst in den Figuren 2 bis 4 dargestelltem, mehrteiligem Klemmelement 14 ist besonders vorteilhaft, da das Anformen bzw. Aufpressen des Verbindungselements 10 auf das entsprechende Ende des GFK-Stabs 3 einzeln erfolgen kann und somit deutlich einfacher ist. Das hier nicht dargestellte Klemmelement 14 kann nach dem Aufcrimpen des Verbindungselements 10 nachträglich mit diesem, mittels Befestigungsmitteln 11, beispielsweise Schrauben etc., verbunden, insbesondere lösbar verbunden, beispielsweise verschraubt etc., werden.

Wie oben bereits beschrieben werden der GFK-Stab 3 und teilweise die Anschlussarmatur 15 sowie das Verbindungselement 10 der Tragklemme 13 von der Silikon-Isolationshülle 5, umhüllt. Die hier dargestellte Ausführungsform einer an sich üblichen Silikon-Isolationshülle 5 des Verbundisolators 1 besteht aus den Abschnitten 6 und 7 und weist dazwischen zwei Schirme 8 auf, die durch die Einbuchtung 9 voneinander getrennt sind. Die Silikon-Isolationshülle 5 umhüllt somit mit dem Anteil 7 unmittelbar insbesondere den Kontaktbereich 16 der Anschlussarmatur 15 sowie mit dem Anteil 6 unmittelbar insbesondere den Kontaktbereich 12 des Verbindungselements 10 und auf diese Weise auch indirekt den GFK-Stab 3. Mit dem Abschnitt der Silikonhülle 5 zwischen den Anteilen 6 und 7, der im Wesentlichen aus den, durch die Einbuchtung 9 voneinander getrennten zwei Schirmen 8 besteht, wird der GFK-Stab 3 unmittelbar umhüllt. Die auf diese Weise geformte Silikonhülle 5 des Verbundisolators 1 gewährleistet einerseits einen besonders großen Kriechweg und verhindert bzw. verringert darüber hinaus gleichzeitig dauerhaft eine Verschmutzung der Oberfläche des Silikonverbundisolators 1 aufgrund der Selbstreinigungseigenschaften des Silikons. Selbstverständlich sind je nach Anforderung sämtliche sinnvollen Ausführungsformen von Isolationshüllen, insbesondere Silikon-Isolationshüllen möglich und einsetzbar.

Figur 2 zeigt eine perspektivische Darstellung der Ausführungsform eines erfindungsgemäßen Verbundisolators 1 aus Figur 1. In dieser Darstellung ist das, in der vorliegenden Ausführungsform der Tragklemme 13 zweigeteilte Klemmelement 14 aus einem Blickwinkel schräg von unten zu sehen. Figur 2 zeigt die Tragklemme 13 in verbundenem, hier verschraubtem Zustand. Dabei ist jeder Teil des zweigeteilten Klemmelements 14 mit jeweils zwei entsprechenden Befestigungsmitteln 11, hier Schrauben mit Muttern, mit dem einteiligen Verbindungselement 10 lösbar verschraubt. Aus dieser Perspektive sind jeweils die Muttern 11 zu sehen, die auf die Enden der Schrauben 11 aufgeschraubt sind. Eine Deckenstromschiene wird zwischen dem Verbindungselement 10 und dem bzw. den Klemmelementen 14 der Tragklemme 13 eingeklemmt bzw. befestigt. Die Geometrie der Tragklemme 13, insbesondere des Verbindungselements 10 und die beiden Teile des Klemmelements 14 sind entsprechend zur Aufnahme eines Deckenstromschienen-Profils so angepasst, dass die entsprechende Deckenstromschiene zwischen dem Verbindungselement 10 und dem zweigeteilten Klemmelement 14 fest- bzw. einklemmbar ist. Die Geometrie der Tragklemme 13, insbesondere des Verbindungselements 10 sieht vorliegend zur optionalen, zusätzlichen Aufnahme beispielsweise einer Kontaktfeder noch eine entsprechende, mittige Einbuchtung vor, auf die bei anderen Ausführungsformen aufgrund anderer Anforderungen auch verzichtet werden kann. Selbstverständlich sind je nach Anforderung sämtliche sinnvollen Ausführungsformen von Tragklemmen mit, individuell angepassten Geometrien möglich und einsetzbar, um die Aufnahme aller möglichen, unterschiedlichen Deckenstromschienen-Profile zu ermöglichen bzw. zu gewährleisten. Das Verbindungselement 10 der Tragklemme 13 ist erfindungsgemäß auf den, in dieser Darstellung nicht sichtbaren GFK-Stab 3 aufgecrimpt und somit Teil des Verbundisolators 1. Des Weiteren sind vom Verbundisolator 1 die bereits bei der Figur 1 erläuterte Silikonhülle 5 mit den zugehörigen Bestandteilen, Abschnitte 6 und 7 sowie die zwei dazwischenliegenden Schirme 8, die durch die Einbuchtung 9 voneinander getrennt sind, und die Anschlussarmatur 15 teilweise zu sehen.

Figur 3 zeigt eine weitere perspektivische Darstellung der Ausführungsform eines erfindungsgemäßen Verbundisolators 1 aus Figur 1. Figur 3 ist abgesehen von der geänderten Perspektive im Wesentlichen identisch zur Figur 2. Die Erläuterungen gemäß Figur 2 gelten deshalb analog auch für die Figur 3. In dieser Darstellung ist deshalb ebenfalls das, in der vorliegenden Ausführungsform der Tragklemme 13 zweigeteilte Klemmelement 14 zu sehen hier im Unterschied zur Figur 2 aus einem Blickwinkel schräg von oben. Figur 3 zeigt die Tragklemme 13 ebenfalls in verbundenem, hier verschraubtem Zustand, bei dem jeder Teil des zweigeteilten Klemmelements 14 mit jeweils zwei entsprechenden Befestigungsmitteln 11, hier Schrauben mit Muttern, mit dem einteiligen Verbindungselement 10 lösbar verschraubt ist. Aus dieser Perspektive sind jeweils die Schraubenköpfe 11 zu sehen, die durch das Verbindungselement 10 und die beiden Teile des Klemmelements 14 hindurchreichen. Des Weiteren ist vom erfindungsgemäßen Verbundisolator 1 wieder die Silikonhülle 5 mit den zugehörigen Bestandteilen, Abschnitte 6 und 7 sowie die zwei dazwischenliegenden Schirme 8 die durch die Einbuchtung 9 voneinander getrennt sind, aus einem anderen Blickwinkel als in der Figur 2 zu sehen. In der Darstellung gemäß Figur 3 sind im Unterschied zur Darstellung gemäß Figur 2 noch die entsprechenden Bohrungen bzw. Bohrlöcher 17 der Anschlussarmatur 15 zu sehen, mittels derer die Anschlussbauteile zur Tragkonstruktion eines Stützpunktes zur Bauwerksdecke hin an die Anschlussarmatur 15 und somit an den erfindungsgemäßen Verbundisolator 1 angeschraubt werden.

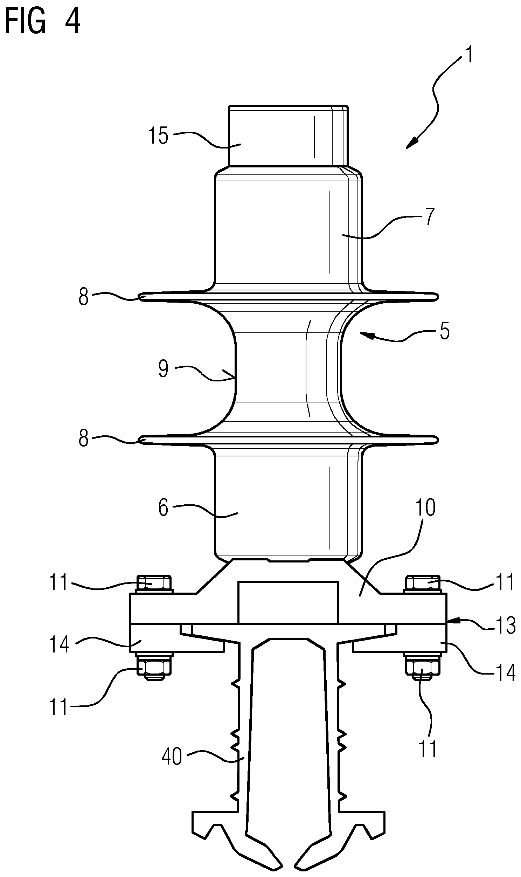

Figur 4 zeigt eine weitere perspektivische Darstellung der Ausführungsform eines erfindungsgemäßen Verbundisolators 1 aus Figur 1 mit eingeklemmter Deckenstromschiene 40. Figur 4 zeigt die zur Aufnahme des Deckenstromschienen-Profils 40 entsprechend angepasste Geometrie der Tragklemme 13, insbesondere des Verbindungselements 10 und der beiden Teile des Klemmelements 14 dergestalt, dass die Deckenstromschiene 40 zwischen dem Verbindungselement 10 und dem zweigeteilten Klemmelement 14 fest- bzw. einklemmbar ist. Zur Aufnahme bzw. zum Einklemmen der Deckenstromschiene 40 werden die vier Schraubverbindungen 11, in der Darstellung gemäß Figur 4 sind nur zwei Schraubverbindungen 11 jeweils mit Schraubenkopf und zugehöriger Mutter sichtbar, zunächst vorteilhafterweise entsprechend so stark gelockert bzw. gelöst, dass die Deckenstromschiene 40 zwischen dem Verbindungselement 10 und dem zweigeteilten Klemmelement 14 eingeschoben bzw. eingesetzt werden kann. Danach werden die Schraubverbindungen 11 wieder festgezogen und die Deckenstromschiene 40 in der Tragklemme 13 eingeklemmt. Die Geometrie der Tragklemme 13 kann je nach Anforderung bzw. den lokalen Gegebenheiten so angepasst werden, dass die einzuklemmende Deckenstromschiene 40 ohne Spiel, also nach dem Einklemmen unbeweglich, oder aber mit einem gewissen Spiel, also nach dem Einklemmen in gewissem Rahmen beweglich, befestigt bzw. eingeklemmt werden kann.

Die Darstellung gemäß Figur 4 zeigt die bevorzugte, besonders einfache, senkrechte Einbauposition des erfindungsgemäßen Verbundisolators 1 zwischen der Deckenstromschiene 40 und dem darüber liegenden, zugehörigen, aus Übersichtlichkeitsgründen hier nicht gezeigten Befestigungsstützpunkt beispielsweise an der Tunneldecke, die durch die signifikant reduzierte Bauhöhe des erfindungsgemäßen Verbundisolators 1 ermöglicht wird und die aufgrund beengter Platzverhältnisse an den entsprechenden Abschnitten der Oberleitungsanlage bisher nicht möglich war. Dadurch können nunmehr erfindungsgemäße Verbundisolatoren 1 an Stellen bzw. Abschnitten einer Oberleitungsanlage, an denen bisher, bedingt durch die Bauhöhe, nur Gießharzisolatoren zum Einsatz kommen konnten, eingesetzt werden, wodurch die Vorteile der Verbundisolatoren 1, mechanische Überlastbarkeit, sicherer Ausfallmechanismus bei Überlast, Erhöhung des Kriechweges, Gestaltung effektiver Schirmprofile sowie eine hydrophobe und schmutzabweisende Oberfläche zur Minimierung von Kriechströmen, an den betreffenden Stellen effektiv genutzt werden können.

Die weiteren in der Figur 4 sichtbaren Bestandteile des Verbundisolators 1, Silikonhülle 5 und Anschlussarmatur 15 entsprechen den bereits zu den vorherigen Figuren erläuterten, entsprechenden Bestandteilen gemäß der vorliegenden Perspektive.

Die Erfindung ist darüber hinaus generell in keiner Weise auf die, in den Figuren 1 bis 4 beschriebenen und gezeigten Ausführungsformen beschränkt. Vielmehr sind auch alle möglichen weiteren, sinnvollen Ausführungsformen der Erfindung vollumfänglich mit umfasst.

Unabhängig vom grammatikalischen Geschlecht eines bestimmten Begriffes sind Personen mit männlicher, weiblicher oder anderer Geschlechteridentität mit umfasst.

## Patentansprüche

1. Verbundisolator (1) für eine Oberleitungsanlage, mit wenigstens einem Isolatorkern (3) und wenigstens einer Verbindungsvorrichtung (15) zur Verbindung des Verbundisolators (1) mit einer Befestigungseinrichtung und wenigstens einer Klemmvorrichtung (13) zur direkten Verbindung des Verbundisolators (1) mit einer Deckenstromschiene (40) der Oberleitungsanlage,
**dadurch gekennzeichnet, dass**
die Klemmvorrichtung (13) wenigstens teilweise unmittelbar an den Isolatorkern (3) des Verbundisolators (1) angeformt ist.

2. Verbundisolator (1) nach Anspruch 1,
**dadurch gekennzeichnet, dass**
die wenigstens eine Klemmvorrichtung (13) mehrteilig ausgeführt ist.

3. Verbundisolator (1) nach Anspruch 1 oder 2,
**dadurch gekennzeichnet, dass**
die Klemmvorrichtung (13) wenigstens aus einem Verbindungselement (10) und wenigstens einem Klemmelement (14) besteht, wobei das wenigstens eine Verbindungselement (10) unmittelbar an den Isolatorkern (3) des Verbundisolators (1) angeformt ist und wobei das wenigstens eine Klemmelement (14) lösbar mit dem wenigstens einen Verbindungselement (10) verbindbar ist.

4. Verbundisolator (1) nach einem der vorherigen Ansprüche,
**dadurch gekennzeichnet, dass**
das wenigstens eine Klemmelement (14) der Klemmvorrichtung (13) aus zwei separaten Teilen besteht.

5. Verbundisolator (1) nach einem der vorherigen Ansprüche,
**dadurch gekennzeichnet, dass**
die Klemmvorrichtung (13) aus Metall ausgeführt ist.

6. Verbundisolator (1) nach einem der vorherigen Ansprüche,
**dadurch gekennzeichnet, dass**
die Klemmvorrichtung (13) des Verbundisolators (1) zum Einklemmen der Deckenstromschiene (40) zwischen dem wenigstens einen Verbindungselement (10) und dem wenigstens einen Klemmelement (14) eingerichtet ist.

7. Verbundisolator (1) nach einem der vorherigen Ansprüche,
**dadurch gekennzeichnet, dass**
der Verbundisolator (1) wenigstens eine Isolationshülle (5) aufweist, die den Isolatorkern (3) und/oder die Verbindungsvorrichtung (15) und/oder die Klemmvorrichtung (13) wenigstens teilweise umhüllt.

8. Verbundisolator (1) nach Anspruch 7,
**dadurch gekennzeichnet, dass**
die Isolationshülle (5) des Verbundisolators (1) im Wesentlichen aus Silikon besteht.

9. Oberleitungsanlage mit wenigstens einem Verbundisolator (1) nach einem der Ansprüche 1 bis 8.

10. Verfahren zum Herstellen eines Verbundisolators (1) nach einem der Ansprüche 1 bis 8 mit folgenden Schritten:
- Zuschneiden eines Isolatorkerns (3),
- Verpressen einer Verbindungsvorrichtung (15) mit dem Isolatorkern (3);
- Verpressen des wenigstens einen Verbindungselements (10) einer Klemmvorrichtung (13) mit dem Isolatorkern (3);
- Umhüllen des Isolatorkerns (3) und/oder der Verbindungsvorrichtung (15) und/oder des Verbindungselements (10) der Klemmvorrichtung (13) wenigstens teilweise mit einer Isolationshülle (5);
- Verbinden des wenigstens einen Klemmelements (14) der Klemmvorrichtung (13) mit dem wenigstens einen Verbindungselement (10) der Klemmvorrichtung (13).
